# EUROPEAN PATENT SPECIFICATION

(11) **EP 0 958 908 B1**
(45) Date of publication and mention of the grant of the patent: **24.02.2010**
(21) Application number: 99107223.2
(22) Date of filing: 14.04.1999
(51) Int. Cl.: B29C 45/26, B29C 45/34

(54) **Dynamic mold seal**
Dynamische Formdichtung
Joint d'étanchéité dynamique pour moule

(30) Priority: 12.03.1999 US 267573; 24.04.1998 US 83028 P; 12.04.1999 US 290327 P
(43) Date of publication of application: 24.11.1999
(73) Proprietor: Husky Injection Molding Systems S.A., 3401 Dudelange (LU)
(72) Inventor: Disimone, John, Woodbridge, Ontario L4L 3N4 (CA)

(56) References cited:
- DE-A- 3 315 746
- DE-A- 4 118 916
- US-A- 5 720 994
- PATENT ABSTRACTS OF JAPAN vol. 1995, no. 07, 31 August 1995 (1995-08-31) & JP 07 096539 A (NIPPON ZEON CO LTD), 11 April 1995 (1995-04-11)
- PATENT ABSTRACTS OF JAPAN vol. 1995, no. 05, 30 June 1995 (1995-06-30) & JP 07 032424 A (MITSUBISHI HEAVY IND LTD), 3 February 1995 (1995-02-03)

## Description

### BACKGROUND OF THE INVENTION

The present invention relates to a dynamic mold seal for use in an injection molding machine, which seal prevents leakage of molten material at the parting line between the molds. The dynamic mold seal of the present invention has particular utility in molding systems for manufacturing compact discs (CDS), digital video discs (DVDs), thinwall containers, and other thinwall articles.

Sometimes during injection, a separation occurs at the parting line between the mold halves. For example, when the force of the injected molten material acting on the surfaces of the core and cavity in opposing directions exceeds a counteracting clamping force exerted by the molding machine, separation can and will occur along the mold parting line. The effect of such separation is the leakage of the pressurized molten material and a resulting undesirable thin film of additional material, known as flash, around the perimeter of the molded article.

There are times however during molding when mold parting line separation occurs intentionally, for example when special processing techniques such as injection-compression are used to reduce molded-in stress in the parts or for example when a pure compression technique is used.

It is known in the prior art to employ a perimeter ring at the parting line to prevent leakage. U.S. Patent No. 5,720,994 to Asai is illustrative of such an arrangement. The perimeter ring is attached to either the mold core face or the mold cavity face. The ring floats on either a guiding diameter or on pins, and is usually spring loaded away from the mold half to which it is attached. It is restricted to a certain travel or protrusion above the parting line by bolts, tapers or other devices. The ring maintains firm contact with the mating parting line face during mold filling.

From Patent Abstract of Japan n° 07096539 is as well known a perimeter sealing ring located in a groove. It comprises also a flexible protruding portion.

To ensure sealing, this prior art arrangement relies on precise alignment of three pieces: the movable mold half, the stationary mold half, and the perimeter ring that slides over their surfaces. Over several million injection cycles, the ring is subject to wear and to seizure or sticking of the ring against the locating surface. If seizure occurs, the ring does not reside in the proper position, and mold flash can result. Misalignment, or non-concentricity, may also occur due to differential thermal expansion between the ring and the core and cavity surfaces.

### SUMMARY OF THE INVENTION

Accordingly, it is an object of the present invention to provide a dynamic mold seal which prevents leakage of the pressurized molten material within a mold cavity during times when there is a separation at the mold parting line.

It is a further object of the present invention to provide a dynamic mold seal as above which avoids the need for precise clearance and which reduces the number of sliding pieces.

It is still a further object of the present invention to provide a dynamic mold seal as above which is not adversely impacted by differential thermal expansion effects.

It is yet a further object of the present invention to provide a dynamic mold seal as above which maintains concentricity with the mold.

It is yet a further object of the present invention to provide an improved method for forming a molded article.

The foregoing objects are attained by the dynamic mold seal and method of the present invention.

In accordance with the present invention, a seal for a mold is provided according to the features of claims 1

In a first embodiment of the present invention, the rigid ring portion is connected to the first one of the mold halves and the sealing portion with the flexible sealing means is formed by a separate member which mates with the rigid ring portion. In a second embodiment of the present invention, the rigid ring portion and the sealing portion with the flexible sealing means are a one-piece, integral construction. If desired, the sealing ring may be provided with one or more grooves for venting gases generated during the injection of the molten material into the mold cavity space formed by the mold halfs.

In operation, the flexible sealing means protrudes above the parting line of the first one of the mold halves to which it is mounted. The amount of protrusion of the flexible sealing means is determined by the amount of expected mold separation during injection. As the first and second mold halves are brought together prior to injection, the protruding flexible sealing means makes contact with the opposite mold half and flexes as the mold continues to close, thus providing a seal for preventing leakage of the molten material, such as a molten plastic resin material, and the creation of flash.

The dynamic mold seal of the present invention offers a number of advantages. For example, it maintains concentricity with the mold because it is pre-aligned and rigidly attached to either the mold core or the mold cavity half. Further, it is immune to differential thermal expansion effects due to the flexible nature of the flexible sealing means. The dynamic mold seal of the present invention may be used in situations where the first and second mold halfs are open slightly during injection, as for example, during the venting of trapped gas.

In accordance with the present invention, an improved method for forming a molded article comprises the steps of: providing a first mold half having at least one of a means for forming a molded article and a mold cavity and a second mold half having at least one of a means for forming a molded article and a mold cavity; providing a sealing ring having a flexible member; mounting the sealing ring to a first one of the mold halfs so that the flexible member protrudes above a mold parting line of the first one of the mold halfs; causing movement of at least one of the mold halfs towards the other of the mold halfs until the flexible member contacts a portion of the second one of the mold halfs so as to create a positive seal between the mold halfs; continuing said movement of said at least one of the mold halfs until the mold halfs contact each other and thereby causing the flexible member to flex toward the first one of the mold halfs while maintaining the positive seal; injecting molten material under pressure into a mold cavity space formed by the mold halfs when the mold halfs are in contact with each other; and allowing the mold halfs to separate slightly so as to vent gases from the mold cavity space during the injecting step, while the flexible member maintains contact with the portion of the second one of the mold halfs during the separation so as to maintain the positive seal.

Other details of the dynamic mold seal and method of the present invention, as well as further objects and advantages attendant thereto, are set forth in the following detailed description and the accompanying drawings in which like reference numerals depict like elements.

### BRIEF DESCRIPTION OF THE DRAWINGS

FIG. 1 is a sectional view of a prior art molding system;
FIG. 2a is a sectional view of a molding system having the dynamic mold seal of the present invention while the molding system is in a mold open position;
FIG. 2b is a sectional view of a molding system having the dynamic mold seal of the present invention while the molding system is in a mold closed position;
FIG. 3 is an enlarged section view of a portion of the molding system of FIGS 2a and 2b.

### DETAILED DESCRIPTION OF THE PREFERRED EMBODIMENT(S)

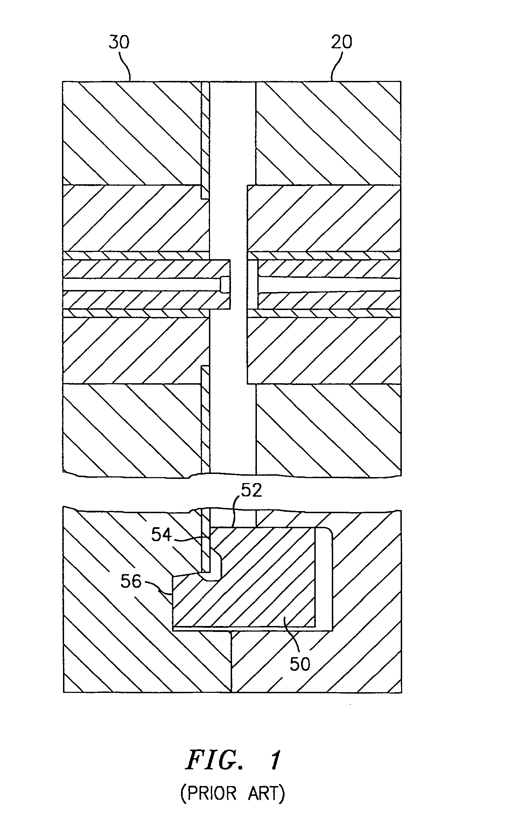

Referring now to the drawings, FIG. 1 illustrates a prior art molding system having a stationary mold half 20 and a movable mold half 30 which is used in molding compact discs (CDs) or digital video discs (DVDs). In this system, an information carrier plate called a stamper is mounted to the movable mold half 30. A perimeter ring 50 is shown for providing a seal when the mold halfs 20 and 30 are separated during injection. As can be seen from this figure, the ring 50 has a number of surfaces 52, 54 and 56 that slide on surfaces of the cavity and core mold halfs. Over time, the surfaces 52, 54 and 56 wear and the ring 50 no longer provides an effective seal.

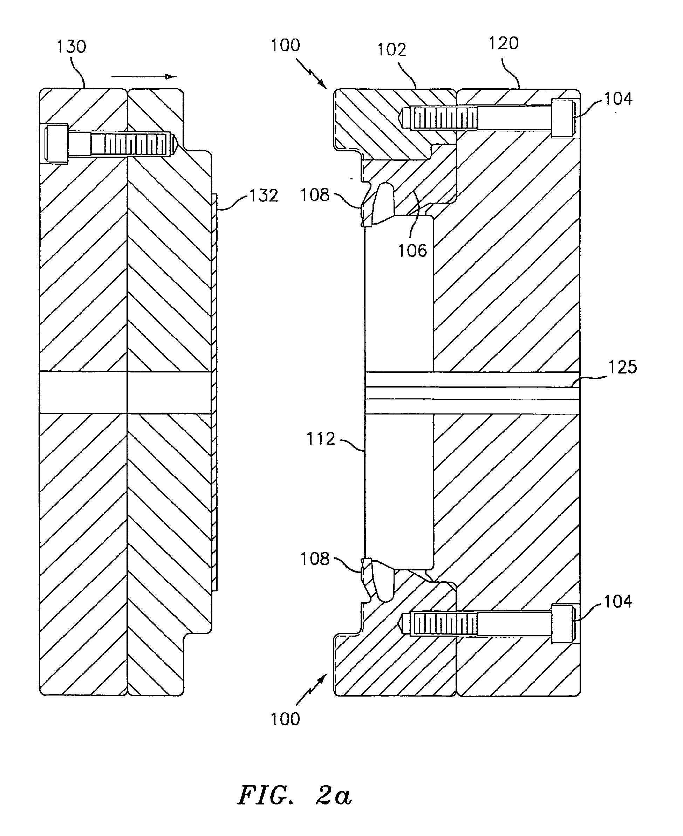

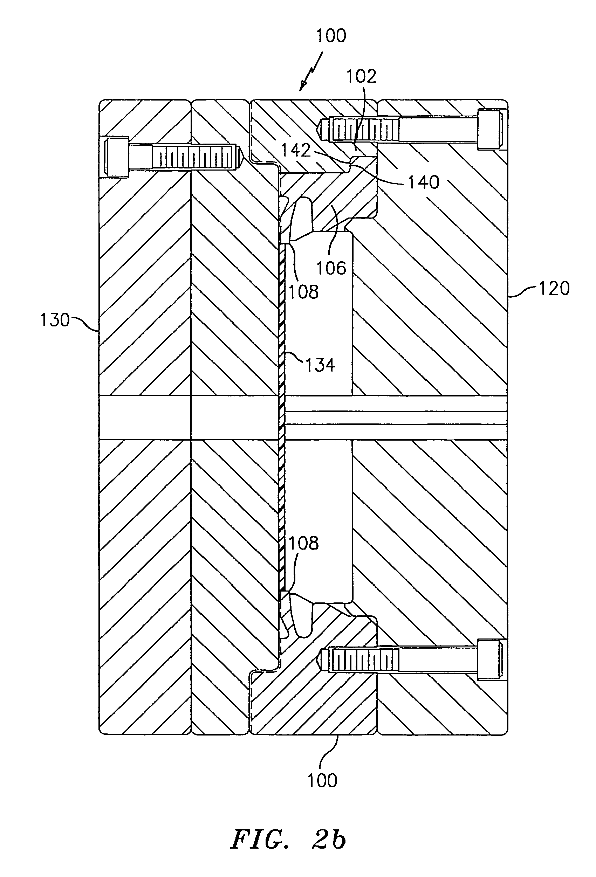

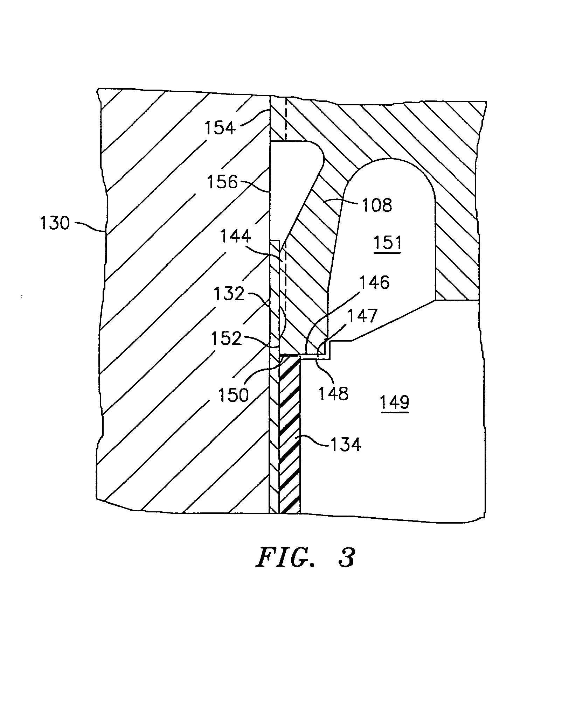

FIGS. 2a, 2b & 3 illustrate the dynamic mold seal of the present invention. The dynamic mold seal may be used with any injection molding system which includes two relatively movable mold halfs 120 and 130. The mold half 120 preferably comprises a mold cavity portion, while the mold half 130 preferably comprises a mold core portion. Both mold halfs may be movable or alternatively one of the mold halfs, such as mold half 120, may be stationary and the other mold half, such as mold half 130, movable relative to the stationary mold half. In a closed position, the mold halfs 120 and 130 define a mold cavity space (not shown) in the shape of the article 134 to be molded. A sprue hole 125 is provided for injecting molten material, such as molten plastic resin material, into the cavity space when the mold halfs 120 and 130 are in a mold closed position.

The molding system depicted in FIGS. 2a, 2b and 3 includes means (not shown) for moving the mold halfs 120 and 130 between mold open and mold closed positions. The moving means do not form part of the present invention and therefore have not been described in detail. The moving means may comprise any suitable conventional moving means known in the art such as piston-cylinder units. The molding system also includes means for exerting an axial force known as a clamping force between the mold halfs 120 and 130 to compress the mold halfs. This axial force is needed to prevent the mold from springing open when the molten material is injected under high pressure, typically 207 bars (3000 psi) and higher, into the mold cavity space. The axial force exerting means also does not form part of the present invention and therefore has not been described in detail. The axial force exerting means may comprise any suitable conventional axial force exerting or clamping force applying means known in the art.

When forming a disc-like article, such as a CD or a DVD, the mold cavity has a projected total surface area perpendicular to the axis along which the axial force is exerted, substantially equal to the disc-shaped area. The total force exerted on the mold by the molten material is typically between 28,000 and 30,000 kg (approximately 30 tons). Such a large outward force must be counteracted by the axial force exerting means if the mold is to remain closed during injection.

The means for exerting the axial force to compress the two mold halfs 120 and 130 together is capable of exerting different magnitudes of compression. In the first stage of injection, the axial force is held to a lower magnitude. This first axial force is less than the product of the injection pressure and the total surface area. In other words, the injected molten material exerts a greater force than the means for exerting the axial force. As a result, the mold formed by the mold halfs 120 and 130 opens slightly along the parting line 112. The means for exerting the axial force however is designed such that the spacing between the mold halfs 120 and 130 is increased only slightly, and the amount of molten material injected is not excessive. The molten material batch inside the mold cavity space is, at this stage of the process, slightly thicker than the finished molded article will be.

The mold half 120 also has means (not shown) for ejecting a molded article 134 from the injection molding machine. The ejection means do not form part of the present invention and therefore have not been described in detail. Any suitable conventional ejection means known in the art may be provided.

The mold core half 130 may carry an insert 132, such as a stamper, for fabricating the molded article 134. When present, the stamper may comprise any suitable stamper known in the art and may be joined to the mold core half 130 in any desired manner.

The molding system includes a dynamic mold seal in the form of a sealing ring 100 positioned circumferentially about the outer periphery of the mold cavity space. The sealing ring 100 may have any desired configuration and will typically conform to the outer configuration of the mold cavity space. When disc-shaped articles such as CDs or DVDs are being molded, the sealing ring 100 is positioned adjacent the outer disc diameter, e.g. 120 mm. for CDs and DVDs. As will be described hereinafter, the sealing ring 100 is designed to allow the mold halfs 120 and 130 to separate slightly during injection while preventing leakage of the molten material within the mold cavity space.

The sealing ring 100 has a rigid ring portion 102 which is intimately connected to the mold half 120 such as by bolt 104. The sealing ring 100 further includes a sealing portion 106 for preventing the leakage of the molten material and the creation of flash. The sealing portion 106, when the mold halves are in an open position, has a flexible sealing member 108 which protrudes above the parting line 112 of the mold half 120. As shown at the bottom of FIGS. 2a and 2b, the sealing ring 100 may be one integral or unitary piece which includes both the rigid ring portion 102 and the sealing portion 106. Alternatively, as shown as the top of FIGS. 2a and 2b, the rigid ring portion 102 and the sealing portion 106 may be separate pieces. If the rigid portion 102 and the sealing portion 106 are separate pieces, they may be joined together in any desired manner. For example, they may be joined together by providing the sealing portion 106 with a shoulder 140 and the rigid portion 102 with a shoulder 142 which abuts against the shoulder 140 and thereby holds the sealing portion 106 in position.

As previously mentioned and as shown in FIG. 3, the sealing portion 106 includes a flexible sealing member 108 with a reduced cross section which renders the member 108 sufficiently flexible to effect a seal when the mold halfs 120 and 130 are slightly separated during injection of the molten material into the mold cavity space. If desired, the reduced cross section member 108 may be provided with one or more vent grooves 144 for allowing gases within the mold to vent while the mold halts 120 and 130 are slightly separated during injection as well as at other times during the molding operation. The vent grooves 144 are preferably sized to allow the gas to pass without allowing the higher viscosity molten material within the mold cavity space to pass. For example, the vent grooves 144 may have a depth of up to about 30 microns. In lieu of vent grooves, it is also possible to provide a small gap, on the order of about 10 to 30 microns, between the sealing ring 100 and the mold halves to allow gas to pass through but not the higher viscosity molten material within the mold.

As shown in FIG. 3, the cavity insert 149 is provided with a safety step 160 to prevent overflexing of member 108. The bottom surface 146 of the sealing member 108 abuts against an outer surface 150 of the article 134 being molded. The bottom surface 146 however is spaced from a surface 148 of the step portion 160 so as to create a circumferential gap 147. The circumferential gap 147 allows gas to pass into an annular or circumferential chamber 151, which gas is later withdrawn through a channel or exhaust holes (not shown) to the atmosphere or by a vacuum means (not shown). The gap 147 provides a vent of constant width, thereby ensuring that plastic cannot flash into it, and serves to allow limited free movement of the flexible sealing member 108. By limiting the movement of the member 108, overbending is avoided. Further, variations in part thickness are controlled, and the material is not overstressed.

Further as shown in FIG. 3, the sealing member 108 has a portion 152 which abuts against a portion of the insert 132. If desired, the sealing portion 106 also may have a surface 154 which abuts against the face 156 of the mold core half. In this way, the flexible sealing member 108 forms a positive seal with the insert 132 and the surface 150 of the molded article so as to prevent the leakage of molten material from the mold even though the mold halfs 120 and 130 are separated during injection and thereby prevent the creation of flash. The flexible sealing member 108 of the present invention is also capable of withstanding the tremendous radial forces associated with the molding operation without any significant loss of its sealing function.

If no insert or stamper is present, the portion 152 of the sealing member 108 may also abut against the face 156 of the mold core half.

The sealing ring 100 may be formed from any suitable material known in the art. A preferred material for the sealing ring 100 is a metallic material such as steel or INCONEL. If desired, the rigid ring portion 102 and the sealing portion 106 may be formed from different materials such as different metals. Alternatively, when the sealing portion 106 is formed from a metallic material, that portion which forms the flexible sealing member 108 may be heat treated to a particular temper, such as a spring temper.

After injection of the molten material has been completed, the means for exerting an axial force on the mold halfs increases the applied axial force to close the mold. The molded article 134 is then allowed to cool within the mold. The mold halfs 120 and 130 may each be provided with conventional cooling circuits (not shown) for cooling the molded article 134. Thereafter, the mold is opened by releasing the axial force being applied and moving the mold halfs relative to each other. Finally, the molded article 134 is ejected from the mold using the ejection means (not shown).

As can be seen from the foregoing description, the sealing ring 100 of the present invention is a stationary ring that is held rigidly in place at the mold parting line and has no sliding surfaces between the sealing member and the mold core and cavity surfaces. As a result, it does not suffer from the same wear problems as prior art seals. The sealing ring 100 of the present invention is further advantageous in that it allows adjustment of the mold thickness during injection of the molten material into the mold.

The flexible sealing member 108 of the ring 100 is designed to protrude above the parting line 112 of the mold to which it is fastened, with the amount of protrusion being determined by the amount of expected mold separation during injection. As the mold halves are brought together prior to injection, the protruding flexible sealing member makes contact with the opposite mold half and flexes as the mold continues to close, providing a positive seal to prevent leakage of the molten material and the creation of flash.

The sealing ring 100 maintains concentricity with the mold because it is pre-aligned and rigidly attached to either the mold core or mold cavity side. Further, the sealing ring of the present invention is immune to differential thermal expansion effects as a result of the flexible nature of the sealing member 108.

While the mold half 120 preferably comprises a mold cavity portion and the mold half 130 preferably comprises a mold core portion, the dynamic mold seal of the present invention would work equally well if mold half 120 is a mold core portion and mold half 130 is a mold cavity portion.

In accordance with the present invention, an improved method for forming a molded article comprises the steps of: providing a first mold half 120 having at least one of a means for forming a molded article and a mold cavity and a second mold half 130 having at least one of a means for forming a molded article and a mold cavity; providing a sealing ring 100 having a flexible member 108; mounting the sealing ring 100 to a first one of the mold halfs 120 so that the flexible member 108 protrudes above a mold parting line 112 of the first one of the mold halfs; causing movement of at least one of the mold halfs towards the other of the mold halfs until the flexible member 108 contacts a portion of the second one of the mold halfs so as to create a positive seal between the mold halfs; continuing said movement of said at least one of the mold halfs until the mold halfs contact each other and thereby causing the flexible member to flex toward the first one of the mold halfs while maintaining the positive seal; injecting molten material under pressure into a mold cavity space formed by the mold halfs 120 and 130 when the mold halfs 120 and 130 are in contact with each other; and allowing the mold halfs 120 and 130 to separate slightly so as to vent gases from the mold cavity space during the injecting step, while the flexible member 108 maintains contact with the portion of the second one of the mold halfs during the separation so as to maintain the positive seal. The positive seal maintained by the flexible member 108 prevents any leakage of molten material from the mold cavity space. The positive seal is created in part by the flexible member 108 contacting an outer space 150 of the molded article. This substantially prevents the creation of flash. The method of the present invention further comprises venting gases from the mold cavity space via at least one groove 144 in the flexible member 108 or via a gap formed between the sealing ring 100 and one of the mold halfs 120 or 130 or via a gap 147 into an annular space 151 for later withdrawal.

It is apparent that there has been provided in accordance with the present invention a dynamic mold seal which meets the objects, means and advantages set forth hereinbefore.
- 100: sealing ring
- 102: rigid ring portion
- 104: bolt
- 106: sealing portion
- 108: flexible sealing member
- 112: parting line
- 120: stat. mold half
- 125: sprue hole
- 130: mov. mold half
- 132: insert
- 134: article
- 140: shoulder s. p.
- 142: shoulder r. p.
- 144: vent groove
- 146: bottom surface
- 147: gap
- 148: surface
- 149: cavity insert
- 150: outer surface
- 151: chamber
- 152: portion
- 154: surface
- 156: face
- 160: safety step

## Claims

1. Mold formed by two mold halves provided with a seal, said seal comprising:
a stationary sealing ring (100) mounted to a first one (120) of said mold halfs;
wherein said sealing ring (100) includes a rigid ring portion (102) affixed to said first one (120) of said mold halfs and a sealing ring portion (106) which mates with said rigid ring portion (102) and a flexible sealing member (108) forming a portion of said sealing ring portion (106);
wherein said rigid ring portion (102) and said sealing rigid portion (106) are formed from a metallic material and said flexible sealing member (108) is formed from a metallic material which has been heat treated to a spring temper; and
wherein said sealing ring portion (106) has a first width and said flexible sealing member (108) has a second width less than said first width which allows said flexible sealing member (108) to flex as said mold halfs (120, 130) move towards and away from a mold closed position for allowing said mold halfs (120, 130) to separate slightly while molten material is being injected into said mold and preventing leakage of pressurized molten material from said mold and thereby preventing the creation of flash about an article (134) being molded within said mold.

2. A mold according to claim 1, wherein said first one (120) of said mold halfs has a mold parting line (112), said stationary sealing ring (100) is held rigidly in place at said mold parting line (112), and said flexible sealing member(108) has no sliding surfaces so as to substantially reduce wear on said flexible sealing member (108).

3. A mold according to claim 1 or 2, further comprising said first one (120) of said mold halfs having a mold parting line (112) and said flexible sealing member (108) protruding above said parting line (112) so that said flexible sealing member (108) can contact a portion of a second one (130) of said mold halfs when said second one (130) of said mold halfs is spaced from said first one (120) of said mold halfs.

4. A mold according to claim 3, wherein said portion of said second one (130) of said mold halfs comprises a stamper (132) used to fabricate said molded article (134) and said flexible sealing member (108) contacts said stamper (132) when said first and second ones (120, 130) of said mold halfs are slightly spaced apart.

5. A mold according to claim 1, wherein said rigid ring portion (102) contains means for positioning said sealing ring portion (106) against said rigid ring portion (102).

6. A mold according to claim 5, wherein said positioning means comprises a shoulder (142) on said rigid ring portion (102) for abutting a mating shoulder (140) on said sealing ring portion (106).

7. A mold according to claim 1, wherein said first one (120) of said mold halfs has a mold cavity and said sealing ring portion (106) has a configuration which corresponds to the configuration of the outer periphery of said mold cavity.

8. A mold according to at least one of claims 1-7, further comprising means for venting gases from said mold formed by said mold halfs (120, 130) incorporated into said flexible sealing member (108).

9. A mold according to claim 8, wherein said venting means comprises at least one groove (144) within said flexible sealing member (108) and each said groove (144) is sized to allow said gases to pass without allowing higher viscosity molten material within a mold cavity space defined by said mold halfs (120), 130) to pass.

10. A mold according to claim 8 or 9, wherein said venting means comprises a gap between the sealing ring portion (106) and a second one (130) of said mold halves.

11. A mold according to at least one of claims 1-10, further comprising said first one (120) of said mold halfs having a mold cavity and said flexible sealing member (108) having a first surface which abuts against an outer surface (150) of said article (134) being molded while said first surface is spaced from a surface of a safety step portion (160) so as to create a gap (147) for gases to vent, and an annular chamber (151) communicating with said gap (147) for collecting said vented gases for later withdrawal.

12. A mold according to claim 11, wherein said safety step portion (160) limits travel of said flexible sealing member (108) while it is abutted against said outer surface (150) of said molded article (134) and against a portion of a second one (130) of said mold halfs so as to prevent overbending and ensure variations in molded article thickness are controlled.

13. A mold according to at least one of claims 1-12, wherein said flexible sealing member (108) is capable of withstanding radial forces associated with molding without any significant loss of sealing function.

14. An injection molding machine comprising:
a first mold half (120) having at least one of a means for forming a molded article (134) and a mold cavity;
a second mold half (130) having at least one of a means for forming a molded article (134) and a mold cavity;
at least one of said first and second mold halfs (120, 130) being movable between a mold open and a mold closed position;
means for injecting molten material into a mold cavity space formed by said mold halfs (120, 130) when said mold halfs are in said mold closed position;
a seal according to claim 1 for allowing said mold halfs (120, 130) to separate slightly while said molten material is being injected into said mold cavity space and for preventing leakage of said molten material from said mold cavity space.

15. An injection molding machine according to claim 14, further comprising:
said one of said mold halfs (120) having a parting line (112);
said stationary ring (100) being held rigidly in place at said mold parting line (112); and
said flexible sealing member (108) protruding above said parting line (112) so that.said flexible sealing member (108) contacts a portion of the mold half (130) to which the stationary ring (100) is not mounted when said mold halfs (120, 130) are slightly separated from each other.

16. An injection molding machine according to claim 14, wherein said sealing ring portion (106) has a configuration which conforms to the configuration of the outer periphery of said mold cavity space.

17. An injection molding machine according to at least one of claims 14-16, further comprising means for venting gases from said mold cavity space during molten material injection.

18. An injection molding machine according to claim 17, wherein said venting means comprises at least one groove (144) within said flexible sealing member (108), said at least one groove (144) being sized to allow said gases to pass without allowing molten material to pass, or a gap between a portion of said flexible sealing member (108) and one of said mold halfs (120, 130), or a circumferential gap (147) between a surface (150) of said flexible sealing member (108) and a safety step portion (160) and an annular chamber (151) communicating with said gap (147) for collecting said vented gases for later withdrawal.

19. A method for forming a molded article comprising the steps of:
providing a first mold half (120) having at least one of a means for forming a molded article and a mold cavity and a. second mold half (130) having at least one of a means for forming a molded article (134) and a mold cavity;
providing a seal according to claim 1;
mounting said sealing ring (100) to a first one (120) of said mold halfs so that said flexible sealing member (108) protrudes above a mold parting line (112) of said first one (120) of said mold halfs;
moving at least one (130) of said mold halfs toward the other one (120) of said mold halfs until said flexible sealing member (108) contacts a portion of said second one (130) of said mold halfs so as to create a positive seal between said mold halfs;
continuing said movement of said at least one (130) of said mold halfs toward said other (120) of said mold halfs until said mold halfs contact each other and thereby causing said flexible sealing member (108) to flex toward said first one of said mold halfs while maintaining said positive seal;
injecting molten material under pressure into a mold cavity space formed by said mold halfs (120, 130) when said mold halfs are in contact with each other; and
allowing said mold halfs (120, 130) to separate slightly so as to vent gases from said mold cavity space during said injecting step, said flexible sealing member (108) maintaining contact with said portion of said second one of said mold halfs during said separation so as to maintain said positive seal.

20. The method of claim 19, further comprising said positive seal maintained by said flexible sealing member (108) preventing any leakage of molten material from said mold cavity space and said flexible sealing member (108) contacting an outer surface of said article (134) being molded so as to prevent the creation of flash.

21. The method of claim 19 or 20, further comprising venting said gases from said mold cavity space via at least one groove (144) in said flexible sealing member (108) or via a gap formed between said sealing ring (100) and said second one (130) of said mold halfs, said gap being dimensioned to allow gas to pass through but not said molten material or via a circumferential gap (147) into an annular chamber (151) adjacent said flexible sealing member (108) for later withdrawal.

## Patentansprüche

1. Form aus zwei Formhälften, die mit einer Dichtung ausgestattet sind, wobei die Dichtung aufweist:
einen stationären Dichtungsring (100), der an einer ersten (120) der Formhälften befestigt ist;
wobei der Dichtungsring (100) einen starren Ringteil (102), der an der ersten (120) der Formhälften befestigt ist, und einen Dichtungsringteil (106), welcher mit dem starren Ringteil (102) zusammenfaßt, sowie ein flexibles Dichtungselement (108) aufweist, das einen Teil des Dichtungsringteiles (106) bildet;
wobei der starre Ringteil (102) und der starre Dichtungsringteil (106) aus einem Metallmaterial geformt sind, und das flexible Dichtungselement (108) aus einem Metallmaterial geformt ist, welches einer Feder-Temperungswärmebehandlung unterzogen wurde; und
wobei der Dichtungsringteil (106) eine erste Breite und das flexible Dichtungselement (108) eine zweite Breite hat, die kleiner als die erste Breite ist, was es dem flexiblen Dichtungselement (108) gestattet, zu biegen, wenn die Formhälften (120, 130) gegen eine und aus einer Formschließstellung weg bewegt werden, um den Formhälften (120, 130) zu gestatten, sich geringfügig zu trennen, während geschmolzenes Material in die Form eingespritzt wird, und ein Lecken des unter Druck stehenden geschmolzenen Materials aus der Form zu verhindern und dadurch die Bildung eines Grates um einen Gegenstand (134) herum verhindern, der innerhalb der Form geformt wird.

2. Form nach Anspruch 1, bei welcher die erste (120) der Formhälften eine Formtrennlinie (112) aufweist, wobei der stationäre Dichtungsring (100) an der Formtrennlinie (112) starr an Ort und Stelle gehalten ist, und das flexible Dichtungselement (108) keine Gleitflächen aufweist, um die Abnützung an dem flexiblen Dichtungselement (108) wesenlich zu reduzieren.

3. Form nach Anspruch 1 oder 2, bei welcher ferner die erste (120) der Formhälften eine Formtrennlinie (112) aufweist, und das flexible Dichtungselement (108) über die Trennlinie (112) vorsteht, so daß das flexible Dichtungselement (108) einen Teil einer zweiten (130) der Formhälften kontaktieren kann, wenn die zweite (130) der Formhälften Abstand von der ersten (120) der Formhälften hat.

4. Form nach Anspruch 3, bei welcher der Teil der zweiten (130) der Formhälften einen Stempel (132) aufweist, der zum Herstellen des geformten Gegenstandes (134) verwendet wird, und das flexible Dichtungselement (108) den Stempel (132) kontaktiert, wenn die erste und die zweite (120, 130) der Formhälften geringfügig beabstandet sind.

5. Form nach Anspruch 1, bei welcher der starre Ringteil (102) Mittel zum Positionieren des Dichtungsringteiles (106) gegen den starren Ringteil (102) enthält.

6. Form nach Anspruch 5, bei welcher die Positionierungsmittel eine Schulter (142) an dem starren Ringteil (102) aufweist, um an einer zusammenpassenden Schulter (140) an dem Dichtungsringteil (106) anzugreifen.

7. Form nach Anspruch 1, bei welcher die erste (120) der Formhälften einen Formhohlraum aufweist, und der Dichtungsringteil (106) eine Form hat, welche der Form des Außenumfanges des Formhohlraumes entspricht.

8. Form nach zumindest einem der Ansprüche 1-7, die ferner Mittel zum Austragen von Gasen aus der Form aufweist, die durch die beiden Formhälften (120, 130) gebildet ist, und die in das flexible Dichtungselement (108) eingebaut sind.

9. Form nach Anspruch 8, bei welcher die Austragmittel zumindest eine Nut (144) innerhalb des flexiblen Dichtungselementes (108) aufweisen, und jede der Nuten (144) so bemessen ist, daß sie gestattet, daß Gase hindurchtreten, ohne zu gestatten, daß höherviskoses geschmolzenes Material innerhalb des Formhohlraumes, der durch die Formhälften (120, 130) gebildet ist, durchtritt.

10. Form nach Anspruch 8 oder 9, bei welcher die Austragmittel einen Spalt zwischen dem Dichtungsringteil (106) und einer zweiten (130) der Formhälften umfassen.

11. Form nach zumindest einem der Ansprüche 1-10, bei welcher ferner die erste (120) der Formhälften einen Formhohlraum hat, und das flexible Dichtungselement (108) eine erste Oberfläche aufweist, welche an der Außenfläche (150) des Gegenstandes (134), der geformt wird, angreift, während die erste Fläche von einer Fläche eines Sicherheitsstufenteiles (160) beabstandet ist, um einen Spalt (147) für die auszutragenden Gase zu erzeugen, wobei eine Ringkammer (151) mit dem Spalt (147) kommuniziert, um die ausgetragenen Gase für einen späteren Abzug zu sammeln.

12. Form nach Anspruch 11, bei welcher der Sicherheitsstufenteil (160) den Weg des flexiblen Dichtungselementes (108) begrenzt, während dieses gegen die äußere Fläche (150) des geformten Gegenstandes (134) und gegen einen Teil einer zweiten (130) der Formhälften in Anlage gehalten ist, um ein übermäßiges Biegen zu verhindern und um sicherzustellen, daß die Variationen in der Dicke des geformten Gegenstandes kontrolliert werden.

13. Form nach zumindest einem der Anspruche 1-12, bei welcher das flexible Dichtungselement (108) befähigt ist, den mit der Formung in Verbindung stehenden Radialkräften ohne einen signifikanten Verlust an Dichtungsfunktion standzuhalten.

14. Spritzgießmaschine, umfassend:
eine erste Formhälfte (120) mit zumindest einem Mittel zum Formen eines geformten Gegenstandes (134) und einem Formhohlraum;
eine zweite Formhälfte (130) mit zumindest einem Mittel zum Formen eines geformten Gegenstandes (134) und einem Formhohlraum;
wobei zumindest eine der ersten und zweiten Formhälften (120, 130) zwischen einer Formoffenstellung und einer Formschließstellung beweglich ist;
Mittel zum Einspritzen geschmolzenen Materials in einen Formhohlraum, der von den Formhälften (120, 130) gebildet ist, wenn sich die Formhälften in der Formschließstellung befinden;
eine Dichtung nach Anspruch 1, die ermöglicht, daß sich die Formhälften (120, 130) geringfügig trennen, während das geschmolzene Material in den Formhohlraum eingespritzt wird, und ein Lecken des geschmolzenen Materials aus dem Formhohlraum verhindert.

15. Spritzgießmaschine nach Anspruch 14, die ferner aufweist:
eine Trennlinie (112) an der ersten der Formhälften (120);
wobei der stationäre Ring (100) an der Formtrennlinie (112) starr an Ort und Stelle gehalten wird; und
wobei das flexible Dichtungselement (108) über die Trennlinie (112) vorsteht, so daß das flexible Dichtungselement (108) einen Teil der Formhälfte (130) kontaktiert, an welcher der stationäre Ring (100) nicht montiert ist, wenn die Formhälften (120, 130) geringfügig voneinander getrennt sind.

16. Spritzgießmaschine nach Anspruch 14, bei welcher der Dichtungsringteil (106) eine Form hat, welche der Form des Außenumfanges des Formhohlraumes entspricht.

17. Spritzgießmaschine nach zumindest einem der Ansprüche 14-16, die ferner Mittel zum Austragen von Gasen aus dem Formhohlraum während des Einspritzens des geschmolzenen Materials aufweist.

18. Spritzgießmaschine nach Anspruch 17, bei welcher diese Austragmittel zumindest eine Nut (144) innerhalb des flexiblen Dichtungselementes (108) aufweisen, wobei die zumindest eine Nut (144) so bemessen ist, daß Gase hindurchtreten können, ohne daß geschmolzenes Material hindurchtreten kann, oder einen Spalt zwischen einem Teil des flexiblen Dichtungselementes (108) und einer der Formhälften (120, 130), oder einen Umfangsspalt (147) zwischen einer Fläche (150) des flexiblen Dichtungselementes (108) und einem Sicherheitsstufenteil (160) und einer ringförmigen Kammer (151), die mit dem Spalt (147) kommuniziert, um die ausgetragenen Gase für den späteren Abzug zu sammeln.

19. Verfahren zum Formen eines geformten Gegenstandes mit den Schritten:
Bereitstellen einer ersten Formhälfte (120) mit zumindest einem Mittel zum Formen eines geformten Gegenstandes und einem Formhohlraum, sowie einer zweiten Formhälfte (130) mit zumindest einem Mittel zum Formen eines geformten Gegenstandes (134) und einem Formhohlraum;
Bereitstellen einer Dichtung nach Anspruch 1;
Befestigen des Dichtungsringes (100) an einer ersten (120) der Formhälften, so daß das flexible Dichtungselement (108) über die Formtrennlinie (112) der ersten (120) der Formhälften vorsteht;
Bewegen zumindest einer (130) der Formhälften gegen die andere (120) der Formhälften, bis das flexible Dichtungselement (108) einen Teil der zweiten (130) der Formhälften kontaktiert, um eine positive Dichtung zwischen den Formhälften zu erzeugen;
Fortsetzen der Bewegung der zumindest einen (130) der Formhälften, gegen die andere (120) der Formhälften, bis die Formhälften einander kontaktieren und dadurch bewirken, daß sich das flexible Dichtungselement (108) gegen die erste der Formhälften biegt, währende eine positive Dichtung aufrechterhalten wird;
Einspritzen des geschmolzenen Materials unter Druck in einen Formhohlraum, der von den Formhälften (120, 130) gebildet wird, wenn die Formhälften miteinander in Kontakt stehen; und
Gestatten, daß sich die Formhälften (120, 130) geringfügig trennen, um die Gase aus dem Formhohlraum während des Einspritzschrittes auszutragen, wobei das flexible Dichtungselement (108) Kontakt mit dem Teil der zweiten der Formhälften während des Trennens aufrechterhält, um die positive Dichtung beizubehalten.

20. Verfahren nach Anspruch 19, bei welchem ferner die positive Dichtung, die durch das flexible Dichtungselement (108) aufrechterhalten wird, jegliches Lecken von geschmolzenem Material aus dem Formhohlraum verhindert, und das flexible Dichtungselement (108) eine Außenfläche des Gegenstandes (134), der geformt wird, kontaktiert, um die Entstehung eines Grates zu verhindern.

21. Verfahren nach Anspruch 19 oder 20, bei welchem ferner die Gase aus dem Formhohlraum über zumindest eine Nut (144) in dem flexiblen Dichtungselement (108) oder über einen Spalt zwischen dem Dichtungsring (100) und der zweiten (130) der Formhälften ausgetragen werden, wobei der Spalt so dimensioniert ist, daß Gas, aber kein geschmolzenes Material hindurchtreten kann, oder über einen Umfangsspalt (147) in eine ringförmige Kammer (151), die dem flexiblen Dichtungselement (108) benachbart ist, für ein spätere Abziehen.

## Revendications

1. Moule formé par deux moitiés de moule pourvues d'un joint d'étanchéité, ledit joint d'étanchéité comportant :
une bague d'étanchéité fixe (100) montée sur une première (120) desdites moitiés de moule ;
ladite bague d'étanchéité (100) comprenant une partie de bague rigide (102) fixée sur ladite première (120) desdites moitiés de moule et une partie de bague d'étanchéité (106) qui correspond à ladite partie de bague rigide (102) et un élément d'étanchéité flexible (108) formant une partie de ladite partie de bague d'étanchéité (106) ;
ladite partie de bague rigide (102) et ladite partie rigide d'étanchéité (106) étant formées dans une matière métallique et ledit élément d'étanchéité flexible (108) étant formé dans une matière métallique qui a été soumise à un traitement thermique de trempe de ressort ; et
ladite partie de bague d'étanchéité (106) ayant une première largeur et ledit élément d'étanchéité flexible (108) ayant une deuxième largeur inférieure à ladite première largeur qui permet audit élément d'étanchéité flexible (108) de fléchir lorsque lesdites moitiés de moule (120, 130) se déplacent vers et à l'écart d'une position de fermeture de moule afin de permettre aux dites moitiés de moule (120, 130) de se séparer légèrement alors que de la matière fondue est injectée dans ledit moule et d'empêcher une fuite de matière fondue pressurisée dudit moule et empêcher ainsi la création de bavure autour d'un article (134) qui est moulé dans ledit moule.

2. Moule selon la revendication 1, dans lequel ladite première (120) desdites moitiés de moule a une ligne de séparation de moule (112), ladite bague d'étanchéité fixe (100) est maintenue rigidement en place au niveau de ladite ligne de séparation de moule (112), et ledit élément d'étanchéité flexible (108) n'a aucune surface de glissement afin de réduire de manière substantielle l'usure sur ledit élément d'étanchéité flexible (108).

3. Moule selon la revendication 1 ou 2, comportant en outre ladite première (120) desdites moitiés de moule ayant une ligne de séparation de moule (112) et ledit élément d'étanchéité flexible (108) dépassant au-dessus de ladite ligne de séparation (112) de telle sorte que ledit élément d'étanchéité flexible (108) peut entrer en contact avec une partie d'une deuxième (130) desdites moitiés de moule lorsque ladite deuxième (130) desdites moitiés de moule est espacée de ladite première (120) desdites moitiés de moule.

4. Moule selon la revendication 3, dans lequel ladite deuxième partie (130) desdites moitiés de moule comporte un poinçon (132) utilisé pour fabriquer ledit article moulé (134) et ledit élément d'étanchéité flexible (108) entre en contact avec ledit poinçon (132) lorsque lesdites première et deuxième (120, 130) desdites moitiés de moule sont légèrement espacées.

5. Moule selon la revendication 1, dans lequel ladite partie de bague rigide (102) contient des moyens destinés à positionner ladite partie de bague d'étanchéité (106) contre ladite partie de bague rigide (102).

6. Moule selon la revendication 5, dans lequel lesdits moyens de positionnement comportent un épaulement (142) sur ladite partie de bague rigide (102) afin de venir en butée contre un épaulement correspondant (140) sur ladite partie de bague d'étanchéité (106).

7. Moule selon la revendication 1, dans lequel ladite première (120) desdites moitiés de moule a une cavité de moule et ladite partie de bague d'étanchéité (106) a une configuration qui correspond à la configuration de la périphérie externe de ladite cavité de moule.

8. Moule selon au moins une des revendications 1 à 7, comportant en outre des moyens pour la mise à l'air libre des gaz dudit moule formé par lesdites moitiés de moule (120, 130) incorporés dans ledit élément d'étanchéité flexible (108).

9. Moule selon la revendication 8, dans lequel lesdits moyens de mise à l'air libre comportent au moins une rainure (144) à l'intérieur dudit élément d'étanchéité flexible (108) et chaque dite rainure (144) est dimensionnée pour permettre aux dits gaz de passer sans permettre à une matière fondue de viscosité plus élevée à l'intérieur d'un espace de cavité de moule définie par lesdites moitiés de moule (120), 130) de passer.

10. Moule selon la revendication 8 ou 9, dans lequel lesdits moyens de mise à l'air libre comportent un espace entre la partie de bague d'étanchéité (106) et une deuxième (130) desdites moitiés de moule.

11. Moule selon au moins une des revendications 1 à 10, comportant en outre ladite première (120) desdites moitiés de moule ayant une cavité de moule et ledit élément d'étanchéité flexible (108) ayant une première surface qui bute contre une surface externe (150) dudit article (134) qui est moulé alors que ladite première surface est espacée d'une surface d'une partie de palier de sécurité (160) de façon à créer un espace (147) pour que les gaz s'échappent, et une chambre annulaire (151) communiquant avec ledit espace (147) afin de recueillir lesdits gaz libérés pour une évacuation ultérieure.

12. Moule selon la revendication 11, dans lequel ladite partie de palier de sécurité (160) limite le déplacement flexibles dudit élément d'étanchéité flexible (108) alors qu'il est en butée contre ladite surface externe (150) dudit article moulé (134) et contre une partie d'une deuxième (130) desdites moitiés de moule de façon à empêcher une flexion excessive et s'assurer que des variations d'épaisseur d'article moulé sont commandées.

13. Moule selon au moins une des revendications 1 à 12, dans lequel ledit élément d'étanchéité flexible (108) est capable de résister à des forces radiales associées au moulage sans aucune perte significative de fonction d'étanchéité.

14. Machine de moulage par injection comportant :
une première moitié de moule (120) ayant au moins un des moyens destinés à former un article moulé (134) et une cavité de moule ;
une deuxième moitié de moule (130) ayant au moins un des moyens destinés à former un article moulé (134) et une cavité de moule ;
au moins une desdites première et deuxième moitiés de moule (120, 130) étant mobiles entre une position de moule ouvert et une position de moule fermé ;
des moyens destinés à injecter de la matière fondue dans un espace de cavité de moule formé par lesdites moitiés de moule (120, 130) quand lesdites moitiés de moule sont dans ladite position de moule fermé ;
un joint d'étanchéité selon la revendication 1 destiné à permettre aux dites moitiés de moule (120, 130) de se séparer légèrement alors que ladite matière fondue est injectée dans ledit espace de cavité de moule et destiné à empêcher une fuite de ladite matière fondue dudit espace de cavité de moule.

15. Machine de moulage par injection selon la revendication 14, comportant en outre :
ladite première desdites moitiés de moule (120) qui a une ligne de séparation (112) ;
ladite bague fixe (100) qui est maintenue rigidement en place au niveau de ladite ligne de séparation de moule (112) ; et
ledit élément d'étanchéité flexible (108) qui dépasse au-dessus de ladite ligne de séparation (112) de telle sorte que ledit élément d'étanchéité flexible (108) entre en contact avec une partie de la moitié de moule (130) sur laquelle la bague fixe (100) n'est pas montée quand lesdites moitiés de moule (120, 130) sont légèrement séparées l'une de l'autre.

16. Machine de moulage par injection selon la revendication 14, dans laquelle ladite partie de bague d'étanchéité (106) a une configuration qui se conforme à la configuration de la périphérie externe dudit espace de cavité de moule.

17. Machine de moulage par injection selon au moins une des revendications 14 à 16, comportant en outre des moyens pour la mise à l'air libre des gaz dudit espace de cavité de moule pendant l'injection de matière fondue.

18. Machine de moulage par injection selon la revendication 17, dans laquelle lesdits moyens de mise à l'air libre comportent au moins une rainure (144) à l'intérieur dudit élément d'étanchéité flexible (108), ladite au moins une rainure (144) étant dimensionnée pour permettre aux dits gaz de passer sans permettre à de la matière fondue de passer, ou bien un espace entre une partie dudit élément d'étanchéité flexible (108) et une desdites moitiés de moule (120, 130), ou bien un espace circonférentiel (147) entre une surface (150) dudit élément d'étanchéité flexible (108) et une partie de palier de sécurité (160) et une chambre annulaire (151) communiquant avec ledit espace (147) afin de recueillir lesdits gaz libérés pour une évacuation ultérieure.

19. Procédé de formation d'un article moulé comportant les étapes consistant à :
prévoir une première moitié de moule (120) ayant au moins un des moyens destinés à former un article moulé et une cavité de moule et une deuxième moitié de moule (130) ayant au moins un des moyens destinés à former un article moulé (134) et une cavité de moule ;
prévoir un joint d'étanchéité selon la revendication 1 ;
monter ladite bague d'étanchéité (100) sur une première (120) desdites moitiés de moule de telle sorte que ledit élément d'étanchéité flexible (108) dépasse au-dessus d'une ligne de séparation de moule (112) de ladite première (120) desdites moitiés de moule ;
déplacer au moins une (130) desdites moitiés de moule vers l'autre (120) desdites moitiés de moule jusqu'à ce que ledit élément d'étanchéité flexible (108) entre en contact avec une partie de ladite deuxième (130) desdites moitiés de moule de façon à créer une étanchéité positive entre lesdites moitiés de moule ;
poursuivre ledit déplacement de ladite au moins une (130) desdites moitiés de moule vers ladite autre (120) desdites moitiés de moule jusqu'à ce que lesdites moitiés de moule entrent en contact l'une avec l'autre et amener ainsi ledit élément d'étanchéité flexible (108) à fléchir vers ladite première desdites moitiés de moule tout en maintenant ladite étanchéité positive ;
injecter de la matière fondue sous pression dans un espace de cavité de moule formé par lesdites moitiés de moule (120, 130) quand lesdites moitiés de moule sont en contact l'une avec l'autre ; et
permettre aux dites moitiés de moule (120, 130) de se séparer légèrement afin de libérer des gaz dudit espace de cavité de moule pendant ladite étape de injection, ledit élément d'étanchéité flexible (108) maintenant un contact avec ladite partie de ladite deuxième desdites moitiés de moule pendant ladite séparation de façon à maintenir ladite étanchéité positive.

20. Procédé selon la revendication 19, comportant en outre ladite étanchéité positive maintenue par ledit élément d'étanchéité flexible (108) en empêchant toute fuite de matière fondue dudit espace de cavité de moule et ledit élément d'étanchéité flexible (108) entrant en contact avec une surface externe dudit article (134) qui est moulé de façon à empêcher la création de bavure.

21. Procédé selon la revendication 19 ou 20, comportant en outre la mise à l'air libre desdits gaz dudit espace de cavité de moule par l'intermédiaire d'au moins une rainure (144) dans ledit élément d'étanchéité flexible (108) ou par l'intermédiaire d'un espace formé entre ladite bague d'étanchéité (100) et ladite deuxième (130) desdites moitiés de moule, ledit espace étant dimensionné pour permettre au gaz de passer à travers mais pas ladite matière fondue non ou par l'intermédiaire d'un espace circonférentiel (147) dans une chambre annulaire (151) adjacente audit élément d'étanchéité flexible (108) pour une évacuation ultérieure.
